(19) **Europäisches Patentamt European Patent Office Office européen des brevets**

(11) **EP 3 388 235 B1**

(12) **EUROPEAN PATENT SPECIFICATION**

(45) Date of publication and mention of the grant of the patent:
**20.12.2023 Bulletin 2023/51**

(21) Application number: **18170405.7**

(22) Date of filing: **12.02.2010**

(51) International Patent Classification (IPC):
**B32B 15/12** (2006.01)    **B32B 27/10** (2006.01)
**B32B 29/00** (2006.01)    **B32B 7/12** (2006.01)
**B32B 37/12** (2006.01)    **C09J 151/06** (2006.01)
**D21H 19/00** (2006.01)    **B32B 15/20** (2006.01)
**B32B 27/32** (2006.01)    **B32B 37/15** (2006.01)

(52) Cooperative Patent Classification (CPC):
**D21H 19/82; B32B 7/12; B32B 15/12; B32B 15/20; B32B 27/16; B32B 27/32; B32B 29/002;**
B32B 2037/243; B32B 2038/166; B32B 2255/06; B32B 2255/12; B32B 2255/26; B32B 2255/28; B32B 2307/50; B32B 2309/105;     (Cont.)

(54) **METHOD OF MAKING A MULTILAYER STRUCTURE**

VERFAHREN ZUR HERSTELLUNG EINER MEHRSCHICHTIGEN STRUKTUR

PROCÉDÉ DE FABRICATION D'UNE STRUCTURE MULTICOUCHE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.03.2009 US 161995 P**

(43) Date of publication of application:
**17.10.2018 Bulletin 2018/42**

(62) Document number(s) of the earlier application(s) in accordance with Art. 76 EPC:
**15193007.0 / 2 995 449**
**10723385.0 / 2 408 617**

(73) Proprietor: **Dow Global Technologies LLC Midland, MI 48674 (US)**

(72) Inventors:
• **ZUERCHER, Karl**
  **8833 Samstagern (CH)**
• **VYORYKKA, Jouko**
  **8810 Horgen (CH)**
• **FEHR, Bernard**
  **7310 Bad Ragaz (CH)**
• **WEVERS, Ronald**
  **4533RD Terneuzen (NL)**
• **SALMINEN, Pekka**
  **8854 Galgenen (CH)**
• **HIPP, Alexander**
  **8802 Kilchberg (CH)**

(74) Representative: **Boult Wade Tennant LLP Salisbury Square House 8 Salisbury Square London EC4Y 8AP (GB)**

(56) References cited:
**US-A- 3 876 452**    **US-A1- 2007 292 705**

(52) Cooperative Patent Classification (CPC): (Cont.)
B32B 2439/00; B32B 2553/00; B32B 2597/00

**Description**

**Field of Invention**

The instant invention relates to a method of making a multilayer structure.

**Background of the Invention**

US-A-2007/292705 relates to aqueous dispersions including (A) at least one ethylene-based polyolefin forming a dispersed polymer phase; (B) at least one dispersing agent; and (C) water; wherein the dispersion has a pH of less than 12; and wherein the dispersed polymer phase has a volume average particle size of less than about 5 microns. An article or a substrate including a coating, wherein the coating was obtained from the aqueous dispersions is also disclosed.

US-A-3,876,452 relates to coated articles of manufacture and laminated structures in which the coating or the binding layer of the laminated structure consists of ethylene polymers containing therein carboxylate groups and optionally amide and/or ester groups. The ethylene polymers are prepared by the alkaline hydrolysis of ethylene-alkyl acrylate copolymers.

The use of coating materials to enhance certain properties of different substrates are generally known. The coating composition should have certain level of adhesion properties in order to maintain desired structural integrities. At the same time, such coating compositions with acceptable level of adhesion properties should facilitate acceptable processing and down stream conversion levels.

In extrusion coating, the amount or weight of coating applied to a surface of a substrate substrates, for example, paper or paperboard, may reach processing limits. Such limitations may prevent the application of lower coat weights with adequate substrate adhesion for a number of different reasons including, but not limited to, reduced degree of oxidation at increased coating line speeds.

Despite the research efforts in producing multilayer structures, there is still a need for a multilayer structure that provides two or more layers with a high degree of compatibility with improved adhesion properties in such processes as extrusion coating process, extrusion lamination process, heat lamination process, or heat sealing process. There is further a need for making such multilayer structures.

**Summary of the Invention**

The instant invention is a process for making a multilayer structure. The process for making a multilayer structure includes the steps of: (1) providing a first layer comprising one or more primary layers having a thickness in the range of less than 1 mm, wherein the one or more primary layers is a cellulosic based material selected from the group consisting of paper or cardboard; (2) providing one or more polyolefin dispersions comprising at least one or more base polymers, at least one or more stabilizing agents from 25 to 65 percent by weight of one filler based on the dry weight of the polyolefin dispersion, wherein the filler is calcium carbonate; a liquid media, and optionally one or more neutralizing agents; (3) applying the one or more polyolefin dispersions to one or more surfaces of the one or more primary layers; (4) removing at lease a portion of the liquid media from the one or more polyolefin dispersions; (5) thereby forming a second layer comprising one or more secondary layers having a thickness in the range of less than 15 $\mu$m, wherein the second layer is associated with at least one surface of the first layer; (6) thereby forming an intermediate structure; (7) forming a third layer comprising one or more tertiary layers having a thickness in the range of less than 150 $\mu$m; (8) bonding the third layer to one or more surfaces of the intermediate structure; and (9) thereby forming the multilayer structure, wherein the second layer is disposed therebetween the first layer and the third layer and wherein the surface of a tertiary layer that is associated with the secondary layer is a polymeric based material.

**Brief Description of the Drawings**

For the purpose of illustrating the invention, there is shown in the drawings a form that is exemplary; it being understood, however, that this invention is not limited to the precise arrangements and instrumentalities shown.

    Fig. 1 is an illustrative embodiment of a multilayer structure;
    Fig. 2 is graphical representation of the average heat seal strength and average heat lamination strength of the exemplary multilayer structures 1-11;
    Fig. 3 is graphical representation of the average heat seal strength and average heat lamination strength of the exemplary multilayer structures 12-22;
    Fig. 4 is graphical representation of the average heat seal strength and average heat lamination strength of the exemplary multilayer structures 23-33;

**Fig. 5** is graphical representation of the average heat seal strength and average heat lamination strength of the exemplary multilayer structures 34-44; and

**Fig. 6** is graphical representation of the average heat seal strength and average heat lamination strength of the comparative multilayer structures 1-11;

**Fig. 7** is a first illustration of an exemplary heat sealing process used to make inventive samples 1-44 to be tested for their properties;

**Fig 8** is a graph illustrating the Seal/ Lamination Bond Strength Curve and the relationship between the Seal Bar Temperature and the Bond Strength.

## Detailed Description of the Invention

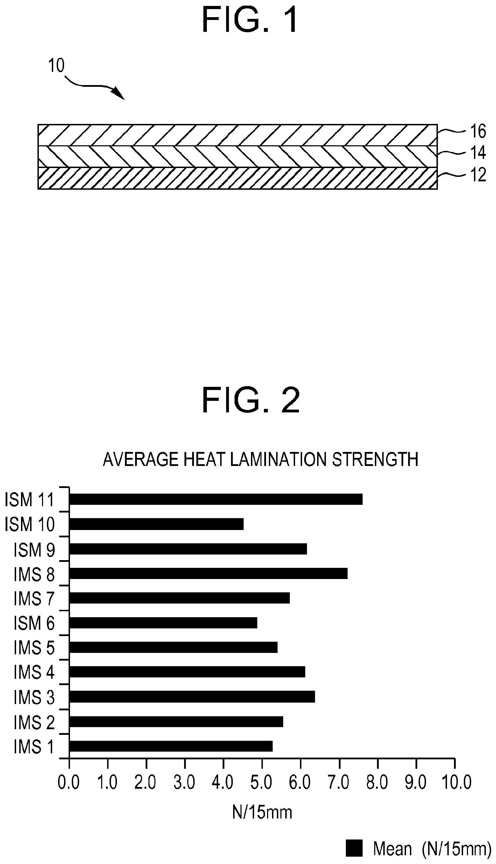

Referring to the drawings wherein like numerals indicate like elements, there is shown, in Fig. 1, a first embodiment of a multilayer structure 10 according to the present invention. Referring to Fig. 1, multilayer structure 10 includes a first layer 12, second layer 14, and third layer 16. First layer 12 comprises one or more primary layers, as described herein below in further details. Second layer 14 comprises one or more secondary layers, as described herein below in further details. Third layer 16 comprises one or more tertiary layers, as described herein below in further details.

The process for making a multilayer structure includes the steps of: (1) providing a first layer comprising one or more primary layers having a thickness in the range of less than 1 mm, wherein the one or more primary layers is a cellulosic based material selected from the group consisting of paper or cardboard; (2) providing one or more polyolefin dispersions comprising at least one or more base polymers, at least one or more stabilizing agents, from 25 to 65 percent by weight of one filler based on the dry weight of the polyolefin dispersion, wherein the filler is calcium carbonate; a liquid media, and optionally one or more neutralizing agents; (3) applying the one or more polyolefin dispersions to one or more surfaces of the one or more primary layers; (4) removing at lease a portion of the liquid media from the one or more polyolefin dispersions; (5) thereby forming a second layer comprising one or more secondary layers having a thickness in the range of less than 15 $\mu$m, wherein the second layer is associated with at least one surface of the first layer; (6) thereby forming an intermediate structure; (7) forming a third layer comprising one or more tertiary layers having a thickness in the range of less than 150 $\mu$m; (8) bonding the third layer at least partially to one or more surfaces of the intermediate structure; and (9) thereby forming the multilayer structure, wherein the second layer is disposed therebetween the first layer and the third layer and wherein the surface of a tertiary layer that is associated with the secondary layer is a polymeric based material.

First layer 12 comprises one or more primary layers. The one or more primary layers are a cellulosic based material selected from the group consisting of paper or cardboard.

The first layer may have a thickness in the range of less than 1 cm. For example, the first layer may have a thickness from a lower limit of 50 $\mu$m, 100 $\mu$m, 500 $\mu$m, 750 $\mu$m, 800 $\mu$m, 900 $\mu$m, 1 mm, to an upper limit of 100 $\mu$m, 500 $\mu$m, 750 $\mu$m, 800 $\mu$m, 900 $\mu$m, 1 mm or less than 1 cm. For example, the one or more substrate layers may have a thickness in the range of 100 to 1000 $\mu$m; or 200 to 900 $\mu$m; or 300 to 750 $\mu$m.

The one or more primary layers may be combined via different methods to form the first layer. Such techniques include, but are not limited to, lamination process.

The second layer comprises one or more secondary layers derived from one or more polyolefin dispersions, as described herein below in further details. The one or more secondary layers may have a thickness in the range of less than 15 $\mu$m. For example, the one or more secondary layers may have a thickness from a lower limit of 0.01 $\mu$m, 0.05 $\mu$m, 0.1 $\mu$m, 0.5 $\mu$m, 1 $\mu$m, 5 $\mu$m, 10 $\mu$m, 12 $\mu$m, or 13 $\mu$m, to an upper limit of 1 $\mu$m, 5 $\mu$m, 10 $\mu$m, 14 $\mu$m, or 15$\mu$m. For example, the one or more secondary layers may have a thickness in the range of 0.01 $\mu$m to 15 $\mu$m; 0.05 $\mu$m to 15 $\mu$m; 0.1 $\mu$m to 15 $\mu$m; or 0.5 $\mu$m to 15 $\mu$m; or 0.5 to 10 $\mu$m; or 0.5 to 8 $\mu$m; or 0.5 to 5 $\mu$m. The one or more secondary layers may comprise from 0.01 g/m$^2$ to 15 g/m$^2$ by weight of one or more polyolefin dispersions. For example, the one or more secondary layers may comprise from a lower limit of 0.01, 0.05, 0.1, 0.5, 1, 3, 5, 7, 10, 12, or 14 g/m$^2$ to an upper limit of 0.5, 1, 3, 5, 7, 10, 12, 14 or 15 g/m$^2$ by weight of one or more dispersions. For example, the one or more secondary layers may comprise from 0.01 g/m$^2$ to 15 g/m$^2$, from 0.1 g/m$^2$ to 15 g/m$^2$, from 0.5 g/m$^2$ to 15 g/m$^2$, from 1 g/m$^2$ to 15 g/m$^2$, or from 5 g/m$^2$ to 15 g/m$^2$ by weight of one or more dispersions. The one or more secondary layers are formed via different methods; for example, the one or more dispersions may be applied to at least one surface of the first layer via a process selected from the group consisting of spray coating process, curtain coating process, blade printing process, metered size press process, rod coating process, flexographic printing process, rotogravure printing process, air knife coating process, immersion (dip) coating process, gap coating process, or rotary screen coating process. Subsequently, at least a portion of the water is removed from the dispersion; thereby, forming a secondary layer. The process may be repeated, that is, applying the dispersion to at least one surface of the first layer and then removing a portion of the water from the dispersion to form additional secondary layers.

The polyolefin dispersion comprises at least one or more base polymers, one or more surfactants, and a fluid medium. The base polymer may, for example, be a polymer selected from the group consisting of ethylene-based polymers, and propylene-based polymers.

In selected embodiments, the base polymer is formed from ethylene-alpha olefin copolymers or propylene-alpha olefin copolymers. In particular, in preferred embodiments, the base polymer comprises one or more non-polar polyolefins.

In one particular embodiment, the base polymer is a propylene/alpha-olefin copolymer, which is characterized as having substantially isotactic propylene sequences. "Substantially isotactic propylene sequences" means that the sequences have an isotactic triad (mm) measured by $^{13}$C NMR of greater than about 0.85; in the alternative, greater than about 0.90; in another alternative, greater than about 0.92; and in another alternative, greater than about 0.93. Isotactic triads are well-known in the art and are described in, for example, U.S. Patent No. 5,504,172 and International Publication No. WO 00/01745, which refer to the isotactic sequence in terms of a triad unit in the copolymer molecular chain determined by $^{13}$C NMR spectra.

The propylene/alpha-olefin copolymer may have a melt flow rate in the range of from 0.1 to 25 g/10 minutes, measured in accordance with ASTM D-1238 (at 230° C / 2.16 Kg). All individual values and subranges from 0.1 to 25 g/10 minutes are included herein and disclosed herein; for example, the melt flow rate can be from a lower limit of 0.1 g/10 minutes, 0.2 g/10 minutes, or 0.5 g/10 minutes to an upper limit of 25 g/10 minutes, 15 g/10 minutes, 10 g/10 minutes, 8 g/10 minutes, or 5 g/10 minutes. For example, the propylene/alpha-olefin copolymer may have a melt flow rate in the range of 0.1 to 10 g/10 minutes; or in the alternative, the propylene/alpha-olefin copolymer may have a melt flow rate in the range of 0.2 to 10 g/10 minutes.

The propylene/alpha-olefin copolymer has a crystallinity in the range of from at least 1 percent by weight (a heat of fusion of at least 2 Joules/gram) to 30 percent by weight (a heat of fusion of less than 50 Joules/gram). All individual values and subranges from 1 percent by weight (a heat of fusion of at least 2 Joules/gram) to 30 percent by weight (a heat of fusion of less than 50 Joules/gram) are included herein and disclosed herein; for example, the crystallinity can be from a lower limit of 1 percent by weight (a heat of fusion of at least 2 Joules/gram), 2.5 percent (a heat of fusion of at least 4 Joules/gram), or 3 percent (a heat of fusion of at least 5 Joules/gram) to an upper limit of 30 percent by weight (a heat of fusion of less than 50 Joules/gram), 24 percent by weight (a heat of fusion of less than 40 Joules/gram), 15 percent by weight (a heat of fusion of less than 24.8 Joules/gram) or 7 percent by weight (a heat of fusion of less than 11 Joules/gram). For example, the propylene/alpha-olefin copolymer may have a crystallinity in the range of from at least 1 percent by weight (a heat of fusion of at least 2 Joules/gram) to 24 percent by weight (a heat of fusion of less than 40 Joules/gram); or in the alternative, the propylene/alpha-olefin copolymer may have a crystallinity in the range of from at least 1 percent by weight (a heat of fusion of at least 2 Joules/gram) to 15 percent by weight (a heat of fusion of less than 24.8 Joules/gram); or in the alternative, the propylene/alpha-olefin copolymer may have a crystallinity in the range of from at least 1 percent by weight (a heat of fusion of at least 2 Joules/gram) to 7 percent by weight (a heat of fusion of less than 11 Joules/gram); or in the alternative, the propylene/alpha-olefin copolymer may have a crystallinity in the range of from at least 1 percent by weight (a heat of fusion of at least 2 Joules/gram) to 5 percent by weight (a heat of fusion of less than 8.3 Joules/gram). The crystallinity is measured via DSC method, as described above. The propylene/alpha-olefin copolymer comprises units derived from propylene and polymeric units derived from one or more alpha-olefin comonomers. Exemplary comonomers utilized to manufacture the propylene/alpha-olefin copolymer are $C_2$, and $C_4$ to $C_{10}$ alpha-olefins; for example, $C_2$, $C_4$, $C_6$ and $C_8$ alpha-olefins.

The propylene/alpha-olefin copolymer comprises from 1 to 40 percent by weight of one or more alpha-olefin comonomers. All individual values and subranges from 1 to 40 weight percent are included herein and disclosed herein; for example, the comonomer content can be from a lower limit of 1 weight percent, 3 weight percent, 4 weight percent, 5 weight percent, 7 weight percent, or 9 weight percent to an upper limit of 40 weight percent, 35 weight percent, 30 weight percent, 27 weight percent, 20 weight percent, 15 weight percent, 12 weight percent, or 9 weight percent. For example, the propylene/alpha-olefin copolymer comprises from 1 to 35 percent by weight of one or more alpha-olefin comonomers; or in the alternative, the propylene/alpha-olefin copolymer comprises from 1 to 30 percent by weight of one or more alpha-olefin comonomers; or in the alternative, the propylene/alpha-olefin copolymer comprises from 3 to 27 percent by weight of one or more alpha-olefin comonomers; or in the alternative, the propylene/alpha-olefin copolymer comprises from 3 to 20 percent by weight of one or more alpha-olefin comonomers; or in the alternative, the propylene/alpha-olefin copolymer comprises from 3 to 15 percent by weight of one or more alpha-olefin comonomers.

The propylene/alpha-olefin copolymer has a molecular weight distribution (MWD), defined as weight average molecular weight divided by number average molecular weight ($M_w/M_n$) of 3.5 or less; in the alternative 3.0 or less; or in another alternative from 1.8 to 3.0.

Such propylene/alpha-olefin copolymers are further described in details in the U.S. Patent Nos. 6,960,635 and 6,525,157. Such propylene/alpha-olefin copolymers are commercially available from The Dow Chemical Company, under the tradename VERSIFY™, or from ExxonMobil Chemical Company, under the tradename VISTAMAXX™. In one embodiment, the propylene/alpha-olefin copolymers are further characterized as comprising (A) between 60 and less than 100, preferably between 80 and 99 and more preferably between 85 and 99, weight percent units derived from propylene, and (B) between greater than zero and 40, preferably between 1 and 20, more preferably between 4 and 16 and even more preferably between 4 and 15, weight percent units derived from at least one of ethylene and/or a $C_{4-10}$ $\alpha$-olefin; and containing an average of at least 0.001, preferably an average of at least 0.005 and more preferably an average of at least 0.01, long chain branches/1000 total carbons. The maximum number of long chain branches in the propylene interpolymer is not critical to the definition of this invention, but typically it does not exceed 3 long chain branches/1000 total carbons. The term long chain branch, as used herein, refers to a chain length of at least one (1) carbon more than a short chain branch, and short chain branch, as used herein, refers to a chain length of two (2) carbons less than the number of carbons in the comonomer. For example, a propylene/1-octene interpolymer has backbones with long chain branches of at least seven (7) carbons in length, but these backbones also have short chain branches of only six (6) carbons in length. Such propylene/alpha-olefin copolymers are further described in details in the U.S. Provisional Patent Application No. 60/988,999 and International Paten Application No. PCT/US08/082599.

In other selected embodiments, olefin block copolymers, for example, ethylene multi-block copolymer, such as those described in the International Publication No. WO2005/090427 and U.S. Patent Application Serial No. 11/376,835 may be used as the base polymer. Such olefin block copolymer may be an ethylene/a-olefin interpolymer:

(a) having a $M_w/M_n$, from 1.7 to 3.5, at least one melting point, Tm, in degrees Celsius, and a density, d, in grams/cubic centimeter, wherein the numerical values of Tm and d corresponding to the relationship:

$$T_m > -2002.9 + 4538.5(d) - 2422.2(d)^2;$$

or

(b) having a MW/Mn from 1.7 to 3.5, and being characterized by a heat of fusion, $\Delta H$ in J/g, and a delta quantity, $\Delta H$, in degrees Celsius defined as the temperature difference between the tallest DSC peak and the tallest CRYSTAF peak, wherein the numerical values of $\Delta T$ and $\Delta H$ having the following relationships:

$\Delta T > -0.1299(\Delta H) + 62.81$ for $\Delta H$ greater than zero and up to 130 J/g,

$\Delta T \geq 48°C$ for $\Delta H$ greater than 130 J/g,

wherein the CRYSTAF peak being determined using at least 5 percent of the cumulative polymer, and if less than 5 percent of the polymer having an identifiable CRYSTAF peak, then the CRYSTAF temperature being 30 °C; or

(c) being characterized by an elastic recovery, Re, in percent at 300 percent strain and 1 cycle measured with a compression-molded film of the ethylene/$\alpha$-olefin interpolymer, and having a density, d, in grams/cubic centimeter, wherein the numerical values of Re and d satisfying the following relationship when ethylene/$\alpha$-olefin interpolymer being substantially free of a cross-linked phase:

$$Re > 1481 - 1629(d);$$

or

(d) having a molecular fraction which elutes between 40 °C and 130 °C when fractionated using TREF, characterized in that the fraction having a molar comonomer content of at least 5 percent higher than that of a comparable random ethylene interpolymer fraction eluting between the same temperatures, wherein said comparable random ethylene interpolymer having the same comonomer(s) and having a melt index, density, and molar comonomer content (based on the whole polymer) within 10 percent of that of the ethylene/$\alpha$-olefin interpolymer; or

(e) having a storage modulus at 25 °C, G' (25 °C), and a storage modulus at 100°C, G' (100 °C), wherein the ratio of G' (25 °C) to G' (100 °C) being in the range of 1:1 to 9:1.

The ethylene/$\alpha$-olefin interpolymer may also:

(a) have a molecular fraction which elutes between 40 °C and 130 °C when fractionated using TREF, characterized in that the fraction having a block index of at least 0.5 and up to about 1 and a molecular weight distribution, $M_w/M_n$, greater than about 1.3; or

(b) have an average block index greater than zero and up to about 1.0 and a molecular weight distribution, $M_w/M_n$, greater than about 1.3.

In alternative embodiments, polyolefins such as polypropylene, polyethylene, and copolymers thereof, and blends thereof, as well as ethylene-propylene-diene terpolymers, may be used as the base polymer. In some embodiments, exemplary olefinic polymers include, but are not limited to, homogeneous polymers described in U.S. Pat. No. 3,645,992 issued to Elston; high density polyethylene (HDPE) as described in U.S. Pat. No. 4,076,698 issued to Anderson; heterogeneously branched linear low density polyethylene (LLDPE); heterogeneously branched ultra low linear density polyethylene (ULDPE); homogeneously branched, linear ethylene/alpha-olefin copolymers; homogeneously branched, substantially linear ethylene/alpha-olefin polymers, which can be prepared, for example, by a process disclosed in U.S. Pat. Nos. 5,272,236 and 5,278,272; and high pressure, free radical polymerized ethylene polymers and copolymers such as low density polyethylene (LDPE).

Polymer compositions described in U.S. Pat. Nos. 6,566,446, 6,538,070, 6,448,341, 6,316,549, 6,111,023, 5,869,575, 5,844,045, or 5,677,383, may be also be used as the base polymer. Of course, blends of polymers can be used as well. In some embodiments, the blends of base polymers include two different Ziegler-Natta polymers. In other embodiments, the blends of base polymers can include blends of a Ziegler-Natta and a metallocene polymer. In still other embodiments, the base polymer blend may be a blend of two different metallocene polymers. In other embodiments polymers produced from single site catalysts may be used. In yet another embodiment, block or multi-block copolymers may be used. Such polymers include those described and claimed in WO2005/090427 (having priority to U.S. Serial No. 60/553,906, filed March 7, 2004).

In some particular embodiments, the base polymer is a propylene-based copolymer or interpolymer. In some embodiments, the propylene/ethylene copolymer or interpolymer is characterized as having substantially isotactic propylene sequences. The term "substantially isotactic propylene sequences" and similar terms mean that the sequences have an isotactic triad (mm) measured by $^{13}$C NMR of greater than about 0.85, preferably greater than about 0.90, more preferably greater than about 0.92 and most preferably greater than about 0.93. Isotactic triads are well-known in the art and are described in, for example, U.S. Pat. No. 5,504,172 and WO 00/01745, which refer to the isotactic sequence in terms of a triad unit in the copolymer molecular chain determined by $^{13}$C NMR spectra.

In other particular embodiments, the base polymer may be ethylene vinyl acetate (EVA) based polymers. In other embodiments, the base polymer may be ethylene-methyl acrylate (EMA) based polymers. In other particular embodiments, the ethylene-alpha olefin copolymer may be ethylene-butene, ethylene-hexene, or ethylene-octene copolymers or interpolymers. In other particular embodiments, the propylene-alpha olefin copolymer may be a propylene-ethylene or a propylene-ethylene-butene copolymer or interpolymer.

In certain embodiments, the base polymer can be an ethylene-octene copolymer or interpolymer having a density between 0.863 and 0.911 g/cc and melt index (190 °C with 2.16 kg weight) from 0.1 to 1200 g/10 min, or in the alternative, from 0.1 to 1000 g/10 min, and in another alternative, 0.1 to 100 g/10 min. In other embodiments, the ethylene-octene copolymers may have a density between 0.863 and 0.902 g/cm$^3$ and melt index (measured at 190 °C under a load of 2.16 kg) from 0.8 to 35 g/10 min.

In certain embodiments, the base polymer can be a propylene-ethylene copolymer or interpolymer having an ethylene content between 5 and 20 percent by weight and a melt flow rate (measured at 230 °C under a load of 2.16 kg) from 0.5 to 300 g/10 min. In other embodiments, the propylene-ethylene copolymer or interpolymer may have an ethylene content between 9 and 12 percent by weight and a melt flow rate (measured at 230 °C under a load of 2.16 kg) from 1 to 100 g/10 min.

In certain other embodiments, the base polymer can be a low density polyethylene having a density between 0.911 and 0.925 g/cm$^3$ and melt index (measured at 190 °C under a load of 2.16 kg) from 0.1 to 100 g/10 min.

In other embodiments, the base polymer can have a crystallinity of less than 50 percent. For example, the crystallinity of the base polymer may be from 5 to 35 percent; or in the alternative, the crystallinity can range from 7 to 20 percent.

In certain other embodiments, the base polymer can have a melting point of less than 110 °C. For example, the melting point may be from 25 to 100 °C; or in the alternative, the melting point may be between 40 and 85 °C.

In certain embodiments, the base polymer can have a weight average molecular weight greater than 20,000 g/mole. For example, the weight average molecular weight may be from 20,000 to 150,000 g/mole; or in the alternative, from 50,000 to 100,000 g/mole.

The one or more base polymers, for example, thermoplastic resins, may be contained within the aqueous dispersion in an amount from 1 percent by weight to 96 percent by weight. For instance, the one or more base polymers, for example, thermoplastic resins, may be present in the aqueous dispersion in an amount from 10 percent by weight to 70 percent by weight, such as from 20 percent to 50 percent by weight.

One or more surfactants may be included in the second internal phase or added to the seed dispersion. The surfactant may be anionic, ionic, cationic or zwitterionic or a mixture of nonionic with cationic, anionic or zwitterionic.

Preferred are nonionic and anionic surfactants. Cationic surfactants such as ammonium salts can also be used.

Examples of anionic surfactants are metal or ammonia salts of sulfonates, phosphates and carboxylates. Suitable surfactants include alkali metal salts of fatty acids such as sodium stearate, sodium palmitate, potassium oleate, alkali metal salts of fatty acid sulfates such as sodium lauryl sulfate, the alkali metal salts of alkylbenzenesulfones and alkylnaphthalenesulfones such as sodium dodecylbenzenesulfonate, sodium alkylnaphthalene-sulfonate; the alkali metal salts of dialkylsulfosuccinates; the alkali metal salts of sulfated alkylphenol ethoxylates such as sodium octylphenoxypolyethoxyeth- yl sulfate; the alkali metal salts of polyethoxyalcohol sulfates and the alkali metal salts of polyethoxyalkylphenol sulfates. metal sulfosuccinate such as dioctyl sodium sulfosuccinate, sodium lauryl sulfate, a sulfosuccinic acid-4-ester with polyethylene glycol dodecylether disodium salt, an alkyl disulfonated diphenyloxide disodium salt such as mono- and dialkyl disulfonated diphenyloxide, disodium salt, dihexyl sodium sulfosuccinate, polyoxy-1,2-ethandiyl-.alpha.-tridecyl-.omega.-hydroxyphosphate, and alkylethersulfate sodium salt

Examples of nonionic surfactants include polyethylene glycol fatty acid mono- and diesters (such as PEG-8 laurate, PEG-10 oleate, PEG-8 dioleate, and PEG-12 distearate); polyethylene glycol glycerol fatty acid esters (such as PEG-40 glyceryl laurate and PEG-20 glyceryl stearate); alcohol-oil transesterification products (such as PEG-35 castor oil, PEG-25 trioleate, and PEG-60 corn glycerides); polyglycerized fatty acids (such as polyglyceryl-2-oleate and polyglyceryl-10 trioleate); propylene glycol fatty acid esters (such as propylene glycol monolaurate); mono- and diglycerides (such as glyceryl monooleate and glyceryl laurate); sterol and sterol derivatives (such as cholesterol); sorbitan fatty acid esters and polyethylene glycol sorbitan fatty acid esters (such as sorbitan monolaurate and PEG-20 sorbitan monolaurate); polyethylene glycol alkyl ethers (such as PEG-3 oleyl ether and PEG-20 stearyl ether); sugar esters (such as sucrose monopalmitate and sucrose monolaurate); polyethylene glycol alkyl phenols (such as PEG-10-100 nonyl phenol, and PEG-15-100 octyl phenol ether); polyoxyethylene-polyoxypropylene block copolymers (such as poloxamer 108 and poloxamer 182); lower alcohol fatty acid esters (such as ethyl oleatea and isopropyl myristate); ethylene oxide adducts of phenols, such as nonyl phenol and any combinations thereof.

Further, if the hydrophobic phase is self-emulsifying by inclusion of emulsifying nonionic, cationic, or anionic groups, then an external surfactant may or may not be necessary.

Additional examples of nonionic surfactants include polyethylene glycol fatty acid mono- and diesters (such as PEG-8 laurate, PEG-10 oleate, PEG-8 dioleate, and PEG-12 distearate); polyethylene glycol glycerol fatty acid esters (such as PEG-40 glyceryl laurate and PEG-20 glyceryl stearate); alcohol-oil transesterification products (such as PEG-35 castor oil, PEG-25 trioleate, and PEG-60 corn glycerides); polyglycerized fatty acids (such as polyglyceryl-2-oleate and polyglyceryl-10 trioleate); propylene glycol fatty acid esters (such as propylene glycol monolaurate); mono- and diglycerides (such as glyceryl monooleate and glyceryl laurate); sterol and sterol derivatives (such as cholesterol); sorbitan fatty acid esters and polyethylene glycol sorbitan fatty acid esters (such as sorbitan monolaurate and PEG-20 sorbitan monolaurate); polyethylene glycol alkyl ethers (such as PEG-3 oleyl ether and PEG-20 stearyl ether); sugar esters (such as sucrose monopalmitate and sucrose monolaurate); polyethylene glycol alkyl phenols (such as PEG-10-100 nonyl phenol, and PEG-15-100 octyl phenol ether); polyoxyethylene-polyoxypropylene block copolymers (such as poloxamer 108 and poloxamer 182); lower alcohol fatty acid esters (such as ethyl oleatea and isopropyl myristate); and any combinations thereof.

Additional examples of suitable ionic surfactants include fatty acid salts (such as sodium laurate and sodium lauryl scarcosinate); bile salts (such as sodium cholate and sodium taurocholate); phosphoric acid esters (such as diethanolammonium polyoxyethylene-10 oleyl ether phosphate); carboxylates (such as ether carbokylates and citric acid esters of mono and diglycerides); acyl lactylates (such as lactylic esters of fatty acids, and propylene glycol aginate); sulfates and sulfonates (such as ethoxylated alkyl sulfates, alkyl benzene sulfones, and acyl taurates); alkyl, aryl, and alkylaryl sulfonates and phosphates; and any combinations thereof.

In certain embodiments, the surfactant, that is, the stabilizing agent, can be a polar polymer, having a polar group as either a comonomer or grafted monomer. In exemplary embodiments, the stabilizing agent comprises one or more polar polyolefins, having a polar group as either a comonomer or grafted monomer. Exemplary polymeric stabilizing agents include, but are not limited to, ethylene-acrylic acid (EAA) and ethylene-methacrylic acid copolymers, such as those available under the trademarks PRIMACOR™, commercially available from The Dow Chemical Company, NUCREL™, commercially available from E.I. DuPont de Nemours, and ESCOR™, commercially available from Exxon-Mobil Chemical Company and described in U.S. Patent Nos. 4,599,392, 4,988,781, and 5,938,437. Other exemplary polymeric stabilizing agents include, but are not limited to, ethylene ethyl acrylate (EEA) copolymer, ethylene methyl methacrylate (EMMA), and ethylene butyl acrylate (EBA). Other ethylene-carboxylic acid copolymer may also be used. Those having ordinary skill in the art will recognize that a number of other useful polymers may also be used.

Other stabilizing agents that may be used include, but are not limited to, long chain fatty acids or fatty acid salts having from 12 to 60 carbon atoms. In other embodiments, the long chain fatty acid or fatty acid salt may have from 12 to 40 carbon atoms.

If the polar group of the polymer is acidic or basic in nature, the polymeric stabilizing agent may be partially or fully neutralized with a neutralizing agent to form the corresponding salt. In certain embodiments, neutralization of the stabilizing agent, such as a long chain fatty acid or EAA, may be from 25 to 200 percent on a molar basis; or in the alternative, it may be from 50 to 110 percent on a molar basis. For example, for EAA, the neutralizing agent may be a base, such as ammonium hydroxide or potassium hydroxide, for example. Other neutralizing agents can include lithium hydroxide or sodium hydroxide, for example. In another alternative, the neutralizing agent may, for example, be any amine such as monoethanolamine, or 2-amino-2-methyl-1-propanol (AMP). Those having ordinary skill in the art will appreciate that the selection of an appropriate neutralizing agent depends on the specific composition formulated, and that such a choice is within the knowledge of those of ordinary skill in the art.

The polyolefin based dispersion further comprises from 25 to 65 percent by weight of one filler based on the dry weight of the polyolefin dispersion, wherein the filler is calcium carbonate.

The polyolefin based dispersion may further comprise one or more colorants, defoaming agents, antifoaming agent, or crosslinking agents.

Third layer comprises one or more tertiary layers. The one or more tertiary layers may be from any material; for example, each tertiary layer may be made from one or more natural materials, one or more synthetic materials, or combinations thereof; provided however, that the surface of a tertiary layer that is associated with the secondary layer is a polymeric based material. The one or more tertiary layers may, for example, comprise one or more cellulosic based materials, one or more metal based materials, and one or more polymeric based materials, or combinations thereof. Exemplary cellulosic based materials include, but are not limited to, paper, cardboard, and corrugate board. Such paper products may further comprise one or more coatings, for example, polymeric coatings or pigmented coatings. Exemplary metal based materials include, but are not limited to, aluminum foil. Polymeric based materials include, but are not limited to, polyolefin based materials such as polyethylene based materials, polypropylene based materials, polyester based materials, and copolymers thereof. The one or more tertiary layers may comprise a film, for example, single layer film, a multiple layer film such as a co-extruded film or a laminated film, a web, a non-woven material, a woven material, a foil, a sheet, a leaf, or combinations thereof. Such tertiary layers, for example, films, may further be surface treated, for example, with metals, for example, aluminum alloys, silicon oxides. One or more tertiary layers may have a uniform surface, or in the alternative, the one or more tertiary layers may have a non-uniform surface. The one or more tertiary layers may a monotonous surface, for example, a smooth or unvarying surface, or in the alternative, a rough surface.

The one or more tertiary layers may have a thickness in the range of less than 150 $\mu$m. For example, the one or more tertiary layers may have a thickness from a lower limit of 0.1 $\mu$m, 0.5 $\mu$m, 1 $\mu$m, 5 $\mu$m, 10 $\mu$m, 15 $\mu$m, 20 $\mu$m, 50 $\mu$m, 80 $\mu$m, or 100 $\mu$m to an upper limit of 0.5 $\mu$m, 1 $\mu$m, 5 $\mu$m, 10 $\mu$m, 50 $\mu$m, 75 $\mu$m, 80 $\mu$m, 100 $\mu$m, or 149 $\mu$m. For example, the one or more tertiary layers may have a thickness in the range of 0.1 $\mu$m to less than 150 $\mu$m; or 0.1 $\mu$m to 125 $\mu$m; or 0.1 $\mu$m to 100 $\mu$m; or 0.1 $\mu$m to 85 $\mu$m; or 0.1 $\mu$m to 50 $\mu$m; or 0.1 $\mu$m to 25 $\mu$m; or 0.1 $\mu$m to 15 $\mu$m.

The one or more tertiary layers may be combined via different methods to form the third layer. Such techniques include, but are not limited to, co-extrusion process, and lamination processes.

In production, a first layer comprising one or more primary layers, as described hereinabove, is provided. One or more polyolefin dispersion, as described herein above, are applied to at least one or more surface of the first layer. One or more polyolefin dispersions may be applied in a single layer or multiple layers via a single step process or multiple step process. Subsequently, at least a portion of the water is removed from the applied polyolefin dispersion to the first layer thereby forming a second layer associated with at least one surface of the first layer thereby forming first intermediate structure. The removal of at least a portion water may be accomplished via different methods, for example, air drying, heat drying, or infrared drying. The third layer comprising one or more tertiary layers may be formed and simultaneously bonded to the first intermediate layer, for example via extrusion coating, thereby forming a multilayer structure, wherein the one or more second layers are disposes between the first and third layers. In the alternative, the third layer comprising one or more tertiary layers may be a preformed layer, for example, a sheet made via extrusion or co-extrusion process, and then subsequently bonded to the first intermediate later, for example, via lamination, thereby forming a multilayer structure, wherein the one or more second layers are disposes between the first and third layers. The lamination process may, for example, include heat induced lamination. Heat induced lamination may be achieved via conventional methods such as irradiation heating, infrared heaters, convection heating, induction heating, contact heating, for example, heated rollers. The presence of second layer facilitates reduced levels of melt temperatures for extrusion coating process. Such reduced levels of melt temperatures in extrusion coating process further facilitate the improvement of certain properties of the multilayer structure while facilitating the improvement of processing speed levels. Such improvements include, but are not limited to, improved bonding levels between different layers while maintaining acceptable processing or down stream conversion levels. The presence of the second layer further reduces the need for pre-treatment of different layers to improve bonding properties therebetween, for example in the extrusion coating process.

The multilayer structures of the present invention may be formed into different articles. Such articles include but are not limited to, sealed containers, sealed pouches, sealed tubes, or folded articles such as folded cartons, or any flexible or semi-rigid packaging products or rigid packaging products. In one embodiment, the present invention provides an article comprising a multilayer structure, as described hereinabove. In an alternative embodiment, the present invention provides a method of making an article comprising the steps of providing a multilayer structure, as described hereinabove, and forming the multilayer structure into the article.

### Examples

The following examples illustrate the present invention but are not intended to limit the scope of the invention. The examples of the instant invention demonstrate multilayer structures according to the instant invention having reduced coat weights while maintaining acceptable bonding levels as well as processing levels.

### Inventive Examples 1-11

Inventive examples 1-11 were prepared according to the following process. A first layer, that is, substrate, comprising a paper board (Board 1) having a weight of 255 g/m$^2$ was provided. A coating composition (CC1) comprising a polyolefin dispersion (POD 1), a filler (HC90ME), and carboxy methyl cellulose (CMC FF330) was provided. POD 1 is an aqueous acid-modified propylene polymer based dispersion having a solid content of approximately 42 weight percent, a pH of approximately 9.5. The formulation components of CC1 is reported in Table I.

CC1 was applied to the Board 1 via blade coating applying between 4-6 g/m$^2$ of coat weight. Subsequently, the applied CC1 to the Board 1 was dried via infrared drying combined with air drying to reduce the moisture content of the Board 1 to approximately 5 weight percent, thereby forming a second layer associated with the Board 1, thereby forming a first intermediate structure 1 (FIS1).

Various polymeric coated aluminum foils (TL1-11) were provided as a third layer comprising one or more tertiary layers. The Polymeric Coating Compositions (PCC1-11) of the Tl1-11 are reported in table II.

PCC 1 is a low density polyethylene having a melt in dex ($I_2$) of approximately 7.7 g/10 minutes according to ISO 1133; a density of approximately 0.918 g/cm$^3$ according to ASTM D-792, provided by The Dow Chemical Company, which is designated as DOW LDPE PG 7008.

PCC 2 is a low density polyethylene having a melt in dex ($I_2$) of approximately 7.7 g/10 minutes according to ISO 1133 (at 190 °C and 2.16 kg); a density of approximately 0.918 g/cm$^3$ according to ASTM D-792, provided by The Dow Chemical Company, which is designated as DOW LDPE PG 7008.

PCC 3 is an ethylene acrylic acid copolymer having a percent comonomer of approximately 8.5, a melt index ($I_2$) of approximately 7.5 according to ASTM D-1238 (at 190 °C and 2.16 kg) or ISO 1133 (at 190 °C and 2.16 kg) at the time of production, provided by The Dow Chemical Company, which is designated as PRIMACOR 3540.

PCC 4 is an ethylene acrylic acid copolymer having a percent comonomer of approximately 3, a melt index ($I_2$) of approximately 7.5 g/10 minutes according to ASTM D-1238 (at 190 °C and 2.16 kg) at the time of production, provided by The Dow Chemical Company, which is designated as AMPLIFY AA 698.

PCC 5 is a polyethylene having a melt index ($I_2$) of approximately 12 g/10 minutes according to ISO 1133 (at 190 °C and 2.16 kg), a density of approximately 0.911 g/cm$^3$ according to ASTM D-792, provided by The Dow Chemical Company, which is designated as ELITE 5800G.

PCC 6 is a polyethylene having a melt index ($I_2$) of approximately 8 g/10 minutes according to ASTM D-1238 (at 190 °C and 2.16 kg), a density of approximately 0.919 g/cm$^3$ according to ASTM D-792, provided by The Dow Chemical Company, which is designated as ELITE 5811G.

PCC 7 is a polyethylene having a melt index ($I_2$) of approximately 8 g/10 minutes according to ASTM D-1238 (at 190 °C and 2.16 kg), a density of approximately 0.919 g/cm$^3$ according to ASTM D-792, provided by The Dow Chemical Company, which is designated as ELITE 5811G.

PCC 8 is an ethylene base polymer having a melt index ($I_2$) of approximately 7.5 g/10 minutes according to ISO 1133 (at 190 °C and 2.16 kg), a density of approximately 0.9029 g/cm$^3$ according to ASTM D-792, provided by The Dow Chemical Company, which is designated as AFFINITY PT1451G.

PCC 8 is an ethylene base polymer having a melt index ($I_2$) of approximately 7.5 g/10 minutes according to ISO 1133 (at 190 °C and 2.16 kg), a density of approximately 0.902 g/cm$^3$ according to ASTM D-792, provided by The Dow Chemical Company, which is designated as AFFINITY PT1451G.

PCC 10 is a propylene base polymer having a density of approximately 0.885 g/cm$^3$ according to ASTM D-792, and a DSC melting point temperature of approximately 106, provided by The Dow Chemical Company, which is designated as DP 5000.01.

PCC 11 is an ethylene-ethyl acrylate copolymer having a a melt index ($I_2$) of approximately 12 g/10 minutes according to ASTM D-1238 (at 190 °C and 2.16 kg), a density of approximately 0.927 g/cm$^3$ according to ASTM D-792, provided by The Dow Chemical Company, which is designated as DP 5030.00.

Inventive multilayer structures 1-11 (MS1-11) were made via heat sealing of the FIS1 with TL1-11, respectively. The heat sealing process comprised a first heat sealing step followed by a curing step at ambient temperature for at least 24 hours then followed by measuring the bond strength on a tensile tester. Heat sealing was performed on a Kopp Lab sealer SGPE 20 equipped with 5mm wide sealing bars coated with 0.5mm Teflon coatings under following conditions:

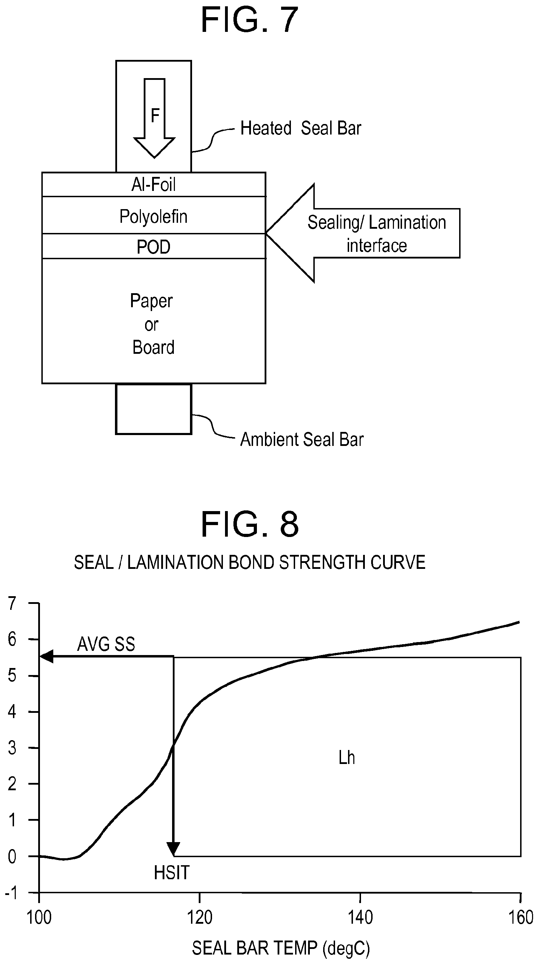

sealing time of 0.5seconds at sealing pressure of 0.5N/mm2, holding the sealing bar facing the tertiary layer at ambient temperature and controlling the sealing bar contacting the 38 micron aluminum foil carrying the polyolefin layer(s) at varying temperatures up to a maximum seal bar temperature of approximately 160 °C. Sample specimens of 15mm width were prepared after 24 hour storage at ambient temperature. The bond strength was performed on a Lloyd Instruments Ltd, tensile tester LR5K, applying a set grip distance of 35 mm. Bond strength was measured in force (N) per specimen width (15 mm) pulling the tertiary layer from the intermediate layer at a cross head speed of 100mm/min reporting the average bond strength in N/15mm over the sealed width of 5mm. Heat sealing is used as a model describing the bond achieved with heat induced sealing as well as for heat induced lamination applying in both the three main parameters temperature, time and pressure to meeting interfaces. Referring to Fig. 7, the heat lamination process is suitably represented by applying a coated aluminum foil facing the highly heat conductive aluminum foil side towards the selected heat source. Heat is readily conducted to the polyolefin layer in contact with the intermediate layer. Average heat seal strength or heat lamination strength were defined as average of seal strength measurements over the temperature range achieving measurable bond strength described as seal strength or heat lamination strength. Average bond strength levels equal or higher than 3N/15mm represent a practical measure of laminate integrity, while lower levels are typically of limited practical use. The results are shown as a graphical representation in Fig. 2.

### Inventive Examples 12-22

Inventive examples 12-22 were prepared according to the following process. A first layer, that is, substrate, comprising a paper board (Board 2) having a weight of 255 g/m$^2$ was provided. A coating composition (CC2) comprising a polyolefin dispersion (POD 2), a filler (HC90ME), and carboxy methyl cellulose (CMC FF330) was provided. POD 2 is an aqueous acid-modified ethylene polymer based dispersion having a solid content of approximately 44 weight percent, a pH of approximately 9.5. The formulation components of CC2 is reported in Table I.

CC2 was applied to the Board 2 via blade coating applying between 4-6 g/m$^2$ of coat weight. Subsequently, the applied CC2 to the Board 2 was dried via infrared drying combined with air drying to reduce the moisture content of the Board 1 to approximately 5 weight percent, thereby forming a second layer associated with the Board 2, thereby forming a first intermediate structure 2 (FIS2).

Various polymeric coated aluminum foils (TL1-11) were provided as a third layer comprising one or more tertiary layers. The Polymeric Coating Compositions (PCC1-11), as described in further details hereinabove in Inventive Examples 1-11, of the Tl1-11 are reported in table II.

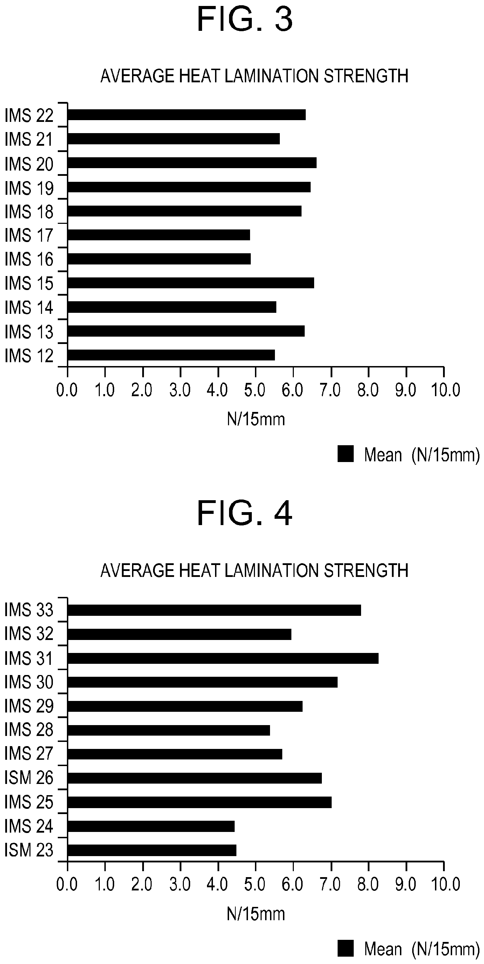

Inventive multilayer structures 12-22 (IMS12-22) were made via heat sealing of the FIS2 with TL1-11, respectively. The heat sealing process comprised a first heat sealing step followed by a curing step at ambient temperature for at least 24 hours then followed by measuring the bond strength on a tensile tester. Heat sealing was performed on a Kopp Lab sealer SGPE 20 equipped with 5mm wide sealing bars coated with 0.5mm Teflon coatings under following conditions: sealing time of 0.5seconds at sealing pressure of 0.5N/mm2, holding the sealing bar facing the tertiary layer at ambient temperature and controlling the sealing bar contacting the 38 micron aluminum foil carrying the polyolefin layer(s) at varying temperatures up to a maximum seal bar temperature of approximately 160 °C. Sample specimens of 15mm width were prepared after 24 hour storage at ambient temperature. The bond strength was performed on a Lloyd Instruments Ltd, tensile tester LR5K, applying a set grip distance of 35 mm. Bond strength was measured in force (N) per specimen width (15 mm) pulling the tertiary layer from the intermediate layer at a cross head speed of 100mm/min reporting the average bond strength in N/15mm over the sealed width of 5mm. Heat sealing is used as a model describing the bond achieved with heat induced sealing as well as for heat induced lamination applying in both the three main parameters temperature, time and pressure to meeting interfaces. Referring to Fig. 7, the heat lamination process is suitably represented by applying a coated aluminum foil facing the highly heat conductive aluminum foil side towards the selected heat source. Heat is readily conducted to the polyolefin layer in contact with the intermediate layer. Average heat seal strength or heat lamination strength were defined as average of seal strength measurements over the temperature range achieving measurable bond strength described as seal strength or heat lamination strength. Average bond strength levels equal or higher than 3N/15mm represent a practical measure of laminate integrity, while lower levels are typically of limited practical use. The results are shown as a graphical representation in Fig. 3.

### Reference Examples 23-33

Reference examples 23-33 were prepared according to the following process. A first layer, that is, substrate, comprising a paper board (Board 3) having a weight of 255 g/m$^2$ was provided. A coating composition (CC3) comprising a polyolefin dispersion (POD 2) and carboxy methyl cellulose (CMC FF330) was provided. POD 2 is an aqueous acid-modified ethylene polymer based dispersion having a solid content of approximately 44 weight percent, a pH of approximately 9.5. The formulation components of CC3 is reported in Table I.

CC3 was applied to the Board 3 via blade coating applying between 4-6 g/m$^2$ of coat weight. Subsequently, the applied CC3 to the Board 3 was dried via infrared drying combined with air drying to reduce the moisture content of the Board 1 to approximately 5 weight percent, thereby forming a second layer associated with the Board 3, thereby forming a first intermediate structure 3 (FIS3).

Various polymeric coated aluminum foils (TL1-11) were provided as a third layer comprising one or more tertiary layers. The Polymeric Coating Compositions (PCC1-11), as described in further details hereinabove in Inventive Examples 1-11, of the Tl1-11 are reported in table II.

Reference multilayer structures 23-33 (IMS23-33) were made via heat sealing of the FIS3 with TL1-11, respectively. The heat sealing process comprised a first heat sealing step followed by a curing step at ambient temperature for at least 24 hours then followed by measuring the bond strength on a tensile tester. Heat sealing was performed on a Kopp Lab sealer SGPE 20 equipped with 5mm wide sealing bars coated with 0.5mm Teflon coatings under following conditions: sealing time of 0.5seconds at sealing pressure of $0.5N/mm^2$, holding the sealing bar facing the tertiary layer at ambient temperature and controlling the sealing bar contacting the 38 micron aluminum foil carrying the polyolefin layer(s) at varying temperatures up to a maximum seal bar temperature of approximately 160 °C. Sample specimens of 15mm width were prepared after 24 hour storage at ambient temperature. The bond strength was performed on a Lloyd Instruments Ltd, tensile tester LR5K, applying a set grip distance of 35 mm. Bond strength was measured in force (N) per specimen width (15 mm) pulling the tertiary layer from the intermediate layer at a cross head speed of 100mm/min reporting the average bond strength in N/15mm over the sealed width of 5mm. Heat sealing is used as a model describing the bond achieved with heat induced sealing as well as for heat induced lamination applying in both the three main parameters temperature, time and pressure to meeting interfaces. Referring to Fig. 7, the heat lamination process is suitably represented by applying a coated aluminum foil facing the highly heat conductive aluminum foil side towards the selected heat source. Heat is readily conducted to the polyolefin layer in contact with the intermediate layer. Average heat seal strength or heat lamination strength were defined as average of seal strength measurements over the temperature range achieving measurable bond strength described as seal strength or heat lamination strength. Average bond strength levels equal or higher than 3N/15mm represent a practical measure of laminate integrity, while lower levels are typically of limited practical use. The results are shown as a graphical representation in Fig. 4.

### Reference Examples 34-44

Reference examples 34-44 were prepared according to the following process. A first layer, that is, substrate, comprising a paper board (Board 4) having a weight of 255 $g/m^2$ was provided. A coating composition (CC4) comprising a polyolefin dispersion (POD 1) and carboxy methyl cellulose (CMC FF330) was provided. POD 1 is an aqueous acid-modified propylene polymer based dispersion having a solid content of approximately 42 weight percent, a pH of approximately 9.5. The formulation components of CC4 is reported in Table I.

CC4 was applied to the Board 1 via blade coating applying between 4-6 $g/m^2$ of coat weight. Subsequently, the applied CC1 to the Board 1 was dried via infrared drying combined with air drying to reduce the moisture content of the Board 1 to approximately 5 weight percent, thereby forming a second layer associated with the Board 1, thereby forming a first intermediate structure 1 (FIS1).

Various polymeric coated aluminum foils (TL1-11) were provided as a third layer comprising one or more tertiary layers. The Polymeric Coating Compositions (PCC1-11), as described in further details hereinabove in Inventive Examples 1-11, of the Tl1-11 are reported in table II.

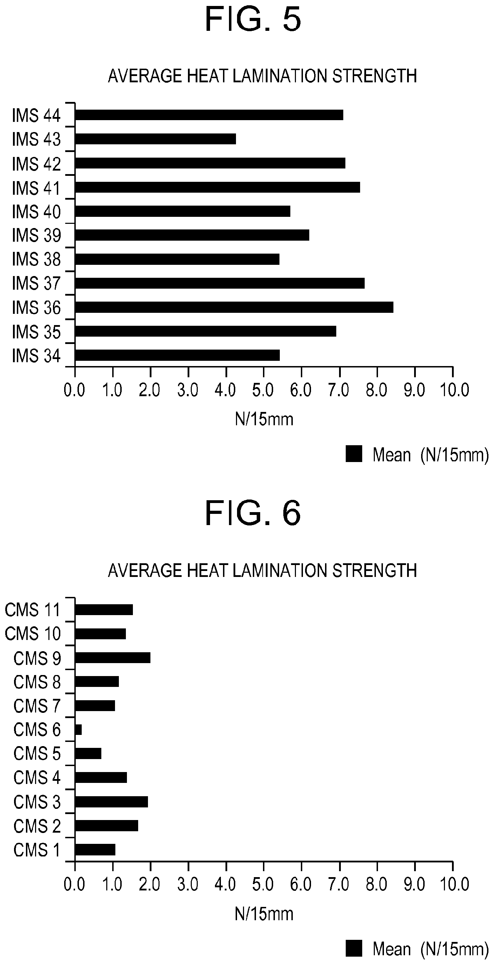

Reference multilayer structures 34-44 (IMS34-44) were made via heat sealing of the FIS1 with TL1-11, respectively. The heat sealing process comprised a first heat sealing step followed by a curing step at ambient temperature for at least 24 hours then followed by measuring the bond strength on a tensile tester. Heat sealing was performed on a Kopp Lab sealer SGPE 20 equipped with 5mm wide sealing bars coated with 0.5mm Teflon coatings under following conditions: sealing time of 0.5seconds at sealing pressure of $0.5N/mm^2$, holding the sealing bar facing the tertiary layer at ambient temperature and controlling the sealing bar contacting the 38 micron aluminum foil carrying the polyolefin layer(s) at varying temperatures up to a maximum seal bar temperature of approximately 160 °C. Sample specimens of 15mm width were prepared after 24 hour storage at ambient temperature. The bond strength was performed on a Lloyd Instruments Ltd, tensile tester LR5K, applying a set grip distance of 35 mm. Bond strength was measured in force (N) per specimen width (15 mm) pulling the tertiary layer from the intermediate layer at a cross head speed of 100mm/min reporting the average bond strength in N/15mm over the sealed width of 5mm. Heat sealing is used as a model describing the bond achieved with heat induced sealing as well as for heat induced lamination applying in both the three main parameters temperature, time and pressure to meeting interfaces. Referring to Fig. 7, the heat lamination process is suitably represented by applying a coated aluminum foil facing the highly heat conductive aluminum foil side towards the selected heat source. Heat is readily conducted to the polyolefin layer in contact with the intermediate layer. Average heat seal strength or heat lamination strength were defined as average of seal strength measurements over the temperature range achieving measurable bond strength described as seal strength or heat lamination strength. Average bond strength levels equal or higher than 3N/15mm represent a practical measure of laminate integrity, while lower levels are typically of limited practical use. The results are shown as a graphical representation in Fig. 5.

## Comparative Examples 1-11

Comparative examples 1-11 were prepared according to the following process. A first layer, that is, substrate, comprising a paper board (Board 5) having a weight of 255 g/m was provided.

Various polymeric coated aluminum foils (TL1-11) were provided as a third layer comprising one or more tertiary layers. The Polymeric Coating Compositions (PCC1-11), as described in further details hereinabove in Inventive Examples 1-11, of the Tl1-11 are reported in table II.

Comparative multilayer structures 1-11 (CMS1-11) were made via heat sealing of the Board 1 with TL1-11, respectively. The heat sealing process comprised a first heat sealing step followed by a curing step at ambient temperature for at least 24 hours then followed by measuring the bond strength on a tensile tester. Heat sealing was performed on a Kopp Lab sealer SGPE 20 equipped with 5mm wide sealing bars coated with 0.5mm Teflon coatings under following conditions: sealing time of 0.5seconds at sealing pressure of 0.5N/mm2, holding the sealing bar facing the tertiary layer at ambient temperature and controlling the sealing bar contacting the 38 micron aluminum foil carrying the polyolefin layer(s) at varying temperatures up to a maximum seal bar temperature of approximately 160 °C. Sample specimens of 15mm width were prepared after 24 hour storage at ambient temperature. The bond strength was performed on a Lloyd Instruments Ltd, tensile tester LR5K, applying a set grip distance of 35 mm. Bond strength was measured in force (N) per specimen width (15 mm) pulling the tertiary layer from the intermediate layer at a cross head speed of 100mm/min reporting the average bond strength in N/15mm over the sealed width of 5mm. Heat sealing is used as a model describing the bond achieved with heat induced sealing as well as for heat induced lamination applying in both the three main parameters temperature, time and pressure to meeting interfaces. Referring to Fig. 7, the heat lamination process is suitably represented by applying a coated aluminum foil facing the highly heat conductive aluminum foil side towards the selected heat source. Heat is readily conducted to the polyolefin layer in contact with the intermediate layer. Average heat seal strength or heat lamination strength were defined as average of seal strength measurements over the temperature range achieving measurable bond strength described as seal strength or heat lamination strength. Average bond strength levels equal or higher than 3N/15mm represent a practical measure of laminate integrity, while lower levels are typically of limited practical use. The results are shown as a graphical representation in Fig. 6.

## Examples 1A-36A

Examples 1A-36A (examples 5A, 6A, 11A, 12A, 17A, 18A, 23A, 24A, 29A, 30A, 35A, 36A are inventive examples according to the invention; the remaining examples are reference examples not according to the invention) were prepared according to the following process. A first layer, that is, substrate, comprising a paper (B 1) having a weight of 60 g/m$^2$ was provided. A 2$^{nd}$ layer coating composition comprising an aqueous acid-modified ethylene polymer based dispersion having a solid content of approximately 42 weight percent, a pH of approximately 9.5 was provided. POD 2 is an aqueous acid-modified ethylene polymer based dispersion having a pH of approximately 9.5. The formulation components of 2$^{nd}$ layer coating compositions are reported in Table III.

Respective 2$^{nd}$ layer coating compositions, as reported in Table III, were each applied to the B1 via a metered size press coating machine, OptiSizer available from Metso Paper,Inc. applying between 0.2-2.5 g/m$^2$ of coat weight, at 500 m/minute coating speed. Subsequently, the applied coating composition to the B1 was dried via infrared drying combined with air drying to reduce the moisture content of the B1 to approximately 5 weight percent, thereby forming a second layer associated with the B1, thereby forming third intermediate structures.

PCC 12-14, as described below, were provided as coating compositions to form a third layer. PCC12-14 were applied to the third intermediate structures via extrusion coating at 200 m/minute generating a coat weight of approximately 20g/m$^2$. The final product were tested for their adhesion rating according to the following procedure, and the results are reported in Table IV. Samples of 15 to 30 mm wide were selected. A panel of at least five individual members pulled the samples apart. The adhesion ratings and failure classifications were reported, as shown in Table IV. Each reported rating is the average of at least 5 manual rating per sample. The adhesion rating scale was 1 (no adhesion) to 10 (inseparable), and the failure classification was as follows: DL=Delamination /Peeling of Tertiary Layer; FT: Fiber Tear - Primary Layer; and FB: Film Break - Tertiary Layer.

PCC 12 is a polyethylene having a melt index (I$_2$) of approximately 4.1 g/10 minutes according to ISO 1133 (at 190 °C and 2.16 kg), a density of approximately 0.922 g/cm$^3$ according to ASTM D-792, provided by The Dow Chemical Company, which is designated as LDPE PG7004.

PCC 13 is a polyethylene having a melt index (I$_2$) of approximately 8 g/10 minutes according to ASTN D-1238 (at 190 °C and 2.16 kg), a density of approximately 0.919 g/cm$^3$ according to ASTM D-792, provided by The Dow Chemical Company, which is designated as ELITE 5811G.

PCC 14 is a polyethylene having a melt index (I$_2$) of approximately 12 g/10 minutes according to ASTN D-1238 (at 190 °C and 2.16 kg), a density of approximately 0.911 g/cm$^3$ according to ASTM D-792, provided by The Dow Chemical Company, which is designated as ELITE 5800G.

**Comparative Examples 1B-12B**

Comparative examples 1B-12B were prepared according to the following process. A first layer, that is, substrate, comprising a paper (B 1) having a weight of 60 g/m$^2$ was provided.

PCC12-14 were provided as coating compositions to form a coating layer. PCC12-14 were applied to the B1 via extrusion coating at 200 m/minute generating a coat weight of approximately 20g/m$^2$. The final product were tested for their adhesion rating according to the following procedure, and the results are reported in Table IV. Samples of 15 to 30 mm wide were selected. A panel of at least five individual members pulled the samples apart. The adhesion ratings and failure classifications were reported, as shown in Table IV. Each reported rating is the average of at least 5 manual rating per sample. The adhesion rating scale was 1 (no adhesion) to 10 (inseparable), and the failure classification was as follows: DL=Delamination /Peeling of Tertiary Layer; FT: Fiber Tear - Primary Layer; and FB: Film Break - Tertiary Layer.

**Table I**

|  | CC1 | CC2 | CC3 | CC4 |
|---|---|---|---|---|
| **POD1 (based on dry weight)** | 50 parts | - | - | 100 parts |
| **POD2 (based on dry weight)** | - | 50 parts | 100 parts | - |
| **Filler (HC90ME) (based on dry weight)** | 50 parts | 50 parts | - | - |
| **Carboxy Methyl Cellulose (CMC FF30) (based on dry weight)** | 2 Parts | 2 parts | 2 Parts | 2 parts |

**Table II**

| Third Layer No. (TL#) | Polymeric Coating Composition (PCC#) | Extrusion was conducted at Set temperature (°C.) | Amount of Coating (g/m$^2$) | Line Speed at which Coating Composition was Applied (mpm) |
|---|---|---|---|---|
| **TL1** | PCC 1 | 290 | 25 | 100 |
| **TL2** | PCC 2 | 320 | 25 | 100 |
| **TL3** | PCC 3 | 290 | 25 | 100 |
| **TL4** | PCC 4 | 290 | 25 | 100 |
| **TL5** | PCC 5 | 290 | 25 | 100 |
| **TL6** | PCC 6 | 290 | 50 | 100 |
| **TL7** | PCC 7 | 320 | 25 | 100 |
| **TL8** | PCC 8 | 290 | 25 | 100 |
| **TL9** | PCC 9 | 320 | 25 | 100 |
| **TL10** | PCC 10 | 290 | 25 | 100 |
| **TL11** | PCC 11 | 290 | 25 | 100 |

**Table III**

| MSS# | Base Layer (Density) | 2$^{nd}$ Layer Coating Composition (Coat Weight) | Porosity of the Intermediate Layer (ml air/min) | Pretreatment of Intermediate Layer | Third Layer Polymeric Coating Composition (Coat Weight of 20g/m$^2$) | 3$^{rd}$ Layer Extension Temperature (°C) |
|---|---|---|---|---|---|---|
| 1A | B1 (60g/m$^2$) | POD 2 (2.5g/m$^2$) | 0.12 | None | PCC12 | 280 |

(continued)

| MSS# | Base Layer (Density) | 2nd Layer Coating Composition (Coat Weight) | Porosity of the Intermediate Layer (ml air/min) | Pretreatment of Intermediate Layer | Third Layer Polymeric Coating Composition (Coat Weight of 20g/m²) | 3rd Layer Extension Temperature (°C) |
|---|---|---|---|---|---|---|
| 2A | B1 (60g/m²) | POD 2 (2.5g/m²) | 0.12 | Corona | PCC12 | 280 |
| 3A | B1 (60g/m²) | POD 2 (0.8 g/m²) | 3.34 | None | PCC12 | 280 |
| 4A | B1 (60g/m²) | POD 2 (0.8g/m²) | 3.34 | Corona | PCC12 | 280 |
| 5A | B1 (60g/m²) | POD 2 (0.8g/m²) + Filler Hydrocarb 60 (HC60) (0.8g/m²) | 3.48 | None | PCC12 | 280 |
| 6A | B1 (60g/m²) | POD 2 (0.8g/m²) + Filler Hydrocarb 60 (HC60) (0.8g/m²) | 3.48 | Corona | PCC12 | 280 |
| 1B | B1 (60g/m²) | None | 8.95 | None | PCC12 | 280 |
| 2B | B1 (60g/m²) | None | 8.95 | Corona | PCC12 | 280 |
| 7A | B1 (60g/m²) | POD 2 (2.5g/m²) | 0.12 | None | PCC12 | 300 |
| 8A | B1 (60g/m²) | POD 2 (2.5g/m²) | 0.12 | Corona | PCC12 | 300 |
| 9A | B1 (60g/m²) | POD 2 (0.8g/m²) | 3.34 | None | PCC12 | 300 |
| 10A | B1 (60g/m²) | POD 2 (0.8g/m²) | 3.34 | Corona | PCC12 | 300 |
| 11A | B1 (60g/m²) | POD 2 (0.8g/m²) + Filler Hydrocarb 60 (HC60) (0.8g/m²) | 3.48 | None | PCC12 | 300 |
| 12A | B1 (60g/m²) | POD 2 (0.8g/m²) + Filler Hydrocarb 60 (HC60) (0.8g/m²) | 3.48 | Corona | PCC12 | 300 |
| 3B | B1 (60g/m²) | None | 8.95 | None | PCC12 | 300 |
| 4B | B1 (60g/m²) | None | 8.95 | Corona | PCC12 | 300 |
| 13A | B1 (60g/m²) | POD 2 (2.5g/m²) | 0.12 | None | PCC 13 | 280 |

(continued)

| MSS# | Base Layer (Density) | 2nd Layer Coating Composition (Coat Weight) | Porosity of the Intermediate Layer (ml air/min) | Pretreatment of Intermediate Layer | Third Layer Polymeric Coating Composition (Coat Weight of 20g/m²) | 3rd Layer Extension Temperature (°C) |
|---|---|---|---|---|---|---|
| 14A | B1 (60g/m²) | POD 2 (2.5g/m²) | 0.12 | Corona | PCC 13 | 280 |
| 15A | B1 (60g/m²) | POD 2 (0.8g/m²) | 3.34 | None | PCC 13 | 280 |
| 16A | B1 (60g/m²) | POD 2 (0.8g/m²) | 3.34 | Corona | PCC 13 | 280 |
| 17A | B1 (60g/m²) | POD 2 (0.8g/m²) + Filler Hydrocarb 60 (HC60) (0.8g/m²) | 3.48 | None | PCC 13 | 280 |
| 18A | B1 (60g/m²) | POD 2 (0.8g/m²) + Filler Hydrocarb 60 (HC60) (0.8g/m²) | 3.48 | Corona | PCC13 | 280 |
| 5B | B1 (60g/m²) | None | 8.95 | None | PCC 13 | 280 |
| 6B | B1 (60g/m²) | None | 8.95 | Corona | PCC 13 | 280 |
| 19A | B1 (60g/m²) | POD 2 (2.5g/m²) | 0.12 | None | PCC 13 | 300 |
| 20A | B1 (60g/m²) | POD 2 (2.5g/m²) | 0.12 | Corona | PCC 13 | 300 |
| 21A | B1 (60g/m²) | POD 2 (0.8g/m²) | 3.34 | None | PCC 13 | 300 |
| 22A | B1 (60g/m²) | POD 2 (0.8g/m²) | 3.34 | Corona | PCC 13 | 300 |
| 23A | B1 (60g/m²) | POD 2 (0.8g/m²) + Filler Hydrocarb 60 (HC60) (0.8g/m²) | 3.48 | None | PCC 13 | 300 |
| 24A | B1 (60g/m²) | POD 2 (0.8g/m²) + Filler Hydrocarb 60 (HC60) (0.8g/m²) | 3.48 | Corona | PCC 13 | 300 |
| 7B | B1 (60g/m²) | None | 8.95 | None | PCC 13 | 300 |
| 8B | B1 (60g/m²) | None | 8.95 | Corona | PCC 13 | 300 |
| 25A | B1 (60g/m²) | POD 2 (2.5g/m²) | 0.12 | None | PCC 14 | 280 |

(continued)

| MSS# | Base Layer (Density) | 2nd Layer Coating Composition (Coat Weight) | Porosity of the Intermediate Layer (ml air/min) | Pretreatment of Intermediate Layer | Third Layer Polymeric Coating Composition (Coat Weight of 20g/m²) | 3rd Layer Extension Temperature (°C) |
|---|---|---|---|---|---|---|
| 26A | B1 (60g/m²) | POD 2 (2.5g/m²) | 0.12 | Corona | PCC 14 | 280 |
| 27A | B1 (60g/m²) | POD 2 (0.8g/m²) | 3.34 | None | PCC 14 | 280 |
| 28A | B1 (60g/m²) | POD 2 (0.8g/m²) | 3.34 | Corona | PCC 14 | 280 |
| 29A | B1 (60g/m²) | POD 2 (0.8g/m²) + Filler Hydrocarb 60 (HC60) (0.8g/m²) | 3.48 | None | PCC 14 | 280 |
| 30A | B1 (60g/m²) | POD 2 (0.8g/m²) + Filler Hydrocarb 60 (HC60) (0.8g/m²) | 3.48 | Corona | PCC14 | 280 |
| 9B | B1 (60g/m²) | None | 8.95 | None | PCC 14 | 280 |
| 10B | B1 (60g/m²) | None | 8.95 | Corona | PCC 14 | 280 |
| 31A | B1 (60g/m²) | POD 2 (2.5g/m²) | 8.95 | Corona | PCC 13 | 300 |
| 32A | B1 (60g/m²) | POD2 (2.5g/m²) | 0.12 | None | PCC 14 | 300 |
| 33A | B1 (60g/m²) | POD2 (0.8g/m²) | 0.12 | Corona | PCC 14 | 300 |
| 34A | B1 (60g/m²) | POD 2 (0.8g/m²) | 3.34 | None | PCC 14 | 300 |
| 35A | B1 (60g/m²) | POD 2 (0.8g/m²) + Filler (0.8g/m²) | 3.34 | Corona | PCC 14 | 300 |
| 36A | B1 (60g/m²) | POD 2 (0.8g/m²) + Filler (0.8g/m²) | 3.48 | None | PCC 14 | 300 |
| 11B | B1 (60g/m²) | None | 3.48 | Corona | PCC 14 | 300 |
| 12B | B1 (60g/m²) | None | 8.95 | None | PCC 14 | 300 |

**Table IV**

| MSS# | Adhesion Rating of Third Layer to Intermediate Layer | Failure Classification |
|---|---|---|
| 1A | 1.9 | DL |

(continued)

| MSS# | Adhesion Rating of Third Layer to Intermediate Layer | Failure Classification |
|---|---|---|
| 2A | 5.9 | DL |
| 3A | 4.3 | DL |
| 4A | 7.1 | FT |
| 5A | 7.7 | FT |
| 6A | 9.0 | FB |
| 1B | 1.5 | DL |
| 2B | 4.1 | DL |
| 7A | 4.7 | DL |
| 8A | 8.9 | FB |
| 9A | 5.9 | DL |
| 10A | 9.0 | FB |
| 11A | 8.6 | FB |
| 12A | 9.0 | FB |
| 3B | 2.1 | DL |
| 4B | 9.1 | FB |
| 13A | 3.3 | DL |
| 14A | 4.3 | DL |
| 15A | 4.7 | DL |
| 16A | 7.0 | FT |
| 17A | 7.8 | FT |
| 18A | 8.9 | FT |
| 5B | 1.6 | DL |
| 6B | 1.9 | DL |
| 19A | 3.5 | DL |
| 20A | 4.9 | DL |
| 21A | 5.1 | DL |
| 22A | 6.4 | FT |
| 23A | 7.1 | FT |
| 24A | 8.0 | FT |
| 7B | 1.6 | DL |
| 8B | 2.4 | DL |
| 25A | 4.1 | DL |
| 26A | 7.3 | FT |
| 27A | 5.3 | DL |
| 28A | 7.4 | FT |
| 29A | 6.7 | FT |
| 30A | 9.1 | FT |
| 9B | 1.7 | DL |

(continued)

| MSS# | Adhesion Rating of Third Layer to Intermediate Layer | Failure Classification |
|---|---|---|
| 10B | 1.4 | DL |
| 31A | 4.6 | DL |
| 32A | 8.6 | FT |
| 33A | 4.3 | FT |
| 34A | 8.2 | FT |
| 35A | 7.0 | FT |
| 36A | 8.1 | FT |
| 11B | 1.7 | DL |
| 12B | 2.6 | DL |

The present invention may be embodied in other forms without departing from the essential attributes thereof, and, accordingly, reference should be made to the appended claims, rather than to the foregoing specification, as indicating the scope of the invention.

**Claims**

1.  A process for making a multilayer structure comprising the steps of:

    providing a first layer comprising one or more primary layers having a thickness in the range of less than 1 mm, wherein the one or more primary layers is a cellulosic based material selected from the group consisting of paper or cardboard;
    providing one or more polyolefin dispersions comprising;

       at least one or more base polymers;
       at least one or more stabilizing agents;
       from 25 to 65 percent by weight of one filler based on the dry weight of the polyolefin dispersion, wherein the filler is calcium carbonate;
       a liquid media and;
       optionally one or more neutralizing agents;

    applying said one or more polyolefin dispersions to one or more surfaces of said one or more primary layers;
    removing at least a portion of the liquid media from said one or more polyolefin dispersions;
    thereby forming a second layer comprising one or more secondary layers having a thickness in the range of less than 15 $\mu$m, wherein said second layer is associated with at least one surface of said first layer;
    thereby forming an intermediate structure;
    forming a third layer comprising one or more tertiary layers having a thickness in the range of less than 150 $\mu$m;
    bonding said third layer to one or more surfaces of said intermediate structure;
    thereby forming said multilayer structure, wherein said second layer is disposed therebetween said first layer and said third layer and wherein the surface of a tertiary layer that is associated with the secondary layer is a polymeric based material.

2.  The process according to Claim 1, wherein the third layer is formed via extrusion coating process.

3.  The process according to Claim 1, wherein the forming and bonding of the third layer to the intermediate layer is via extrusion lamination process.

4.  The process according to Claim 1, wherein said third layer is bonded to the intermediate layer via lamination process.

5.  The process according to Claim 1, wherein bonding of at least partial surface of the third layer to the intermediate layer is via heat sealing process.

## Patentansprüche

1. Verfahren zum Herstellen einer mehrschichtigen Struktur, umfassend die Schritte:

   Bereitstellen einer ersten Schicht, umfassend eine oder mehrere Primärschichten, die eine Dicke im Bereich von weniger als 1 mm aufweisen,
   wobei die eine oder die mehreren Primärschichten ein cellulosebasiertes Material ist, das aus der Gruppe ausgewählt ist, bestehend aus Papier oder Pappe;
   Bereitstellen einer oder mehrerer Polyolefindispersionen, umfassend;
   mindestens ein oder mehrere Basispolymere;
   mindestens ein oder mehrere Stabilisierungsmittel;
   zu 25 bis 65 Gew.-% einen Füllstoff basierend auf dem Trockengewicht der Polyolefindispersion, wobei der Füllstoff Calciumcarbonat ist,
   ein flüssiges Medium und;
   optional ein oder mehrere Neutralisationsmittel;
   Auftragen der einen oder der mehreren Polyolefindispersionen auf eine oder mehrere Oberflächen der einen oder der mehreren Primärschichten,
   Entfernen mindestens eines Teils des flüssigen Mediums von der einen oder den mehreren Polyolefindispersionen,
   wobei dadurch eine zweite Schicht gebildet wird, umfassend eine oder mehrere Sekundärschichten, die eine Dicke im Bereich von weniger als 15 $\mu$m aufweisen, wobei die zweite Schicht mit mindestens einer Oberfläche der ersten Schicht verknüpft ist,
   wobei dadurch eine Zwischenstruktur gebildet wird,
   Bilden einer dritten Schicht, umfassend eine oder mehrere Tertiärschichten, die eine Dicke im Bereich von weniger als 150 $\mu$m aufweisen,
   Binden der dritten Schicht mit einer oder mehreren Oberflächen der Zwischenstruktur;
   wobei dadurch die mehrschichtige Struktur gebildet wird, wobei die zweite Schicht zwischen der ersten Schicht und der dritten Schicht angeordnet ist, und wobei die Oberfläche einer Tertiärschicht, die mit der Sekundärschicht verknüpft ist, ein polymerbasiertes Material ist.

2. Verfahren nach Anspruch 1, wobei die dritte Schicht über ein Extrusionsbeschichtungsverfahren gebildet wird.

3. Verfahren nach Anspruch 1, wobei das Bilden und Binden der dritten Schicht mit der Zwischenschicht über ein Extrusionskaschierverfahren erfolgt.

4. Verfahren nach Anspruch 1, wobei die dritte Schicht über ein Kaschierverfahren mit der Zwischenschicht gebunden wird.

5. Verfahren nach Anspruch 1, wobei das Binden mindestens einer Teiloberfläche der dritten Schicht mit der Zwischenschicht über ein Heißsiegelverfahren erfolgt.

## Revendications

1. Procédé de fabrication d'une structure multicouche comprenant les étapes consistant à :

   fournir une première couche comprenant une ou plusieurs couches primaires ayant une épaisseur inférieure à 1 mm,
   dans lequel la ou les couches primaires sont un matériau à base de cellulose choisi dans le groupe constitué de papier ou carton ;
   fournir une ou plusieurs dispersions de polyoléfines comprenant ;
   au moins un ou plusieurs polymères de base ;
   au moins un ou plusieurs agents stabilisants ;
   de 25 à 65 pour cent en poids d'une charge sur la base du poids sec de la dispersion de polyoléfine, dans lequel la charge est du carbonate de calcium ;

un milieu liquide et ;

éventuellement un ou plusieurs agents neutralisants ;

appliquer ladite ou lesdites dispersions de polyoléfines à une ou plusieurs surfaces de ladite ou desdites couches primaires ;

l'élimination d'au moins une partie du milieu liquide de ladite ou desdites dispersions de polyoléfines ;

former ainsi une deuxième couche comprenant une ou plusieurs couches secondaires ayant une épaisseur inférieure à 15 $\mu$m, dans lequel ladite deuxième couche est associée à au moins une surface de ladite première couche ;

former ainsi une structure intermédiaire ;

former une troisième couche comprenant une ou plusieurs couches tertiaires ayant une épaisseur inférieure à 150 $\mu$m ;

lier ladite troisième couche à une ou plusieurs surfaces de ladite structure intermédiaire ;

former ainsi ladite structure multicouche, dans lequel ladite deuxième couche est disposée entre ladite première couche et ladite troisième couche et dans lequel la surface d'une couche tertiaire qui est associée à la couche secondaire est un matériau à base de polymère.

2. Procédé selon la revendication 1, dans lequel la troisième couche est formée par l'intermédiaire d'un processus de revêtement par extrusion.

3. Procédé selon la revendication 1, dans lequel la formation et la liaison de la troisième couche à la couche intermédiaire se font par l'intermédiaire d'un processus de laminage par extrusion.

4. Procédé selon la revendication 1, dans lequel ladite troisième couche est liée à la couche intermédiaire par l'intermédiaire d'un processus de laminage.

5. Procédé selon la revendication 1, dans lequel la liaison d'au moins une surface partielle de la troisième couche à la couche intermédiaire se fait par l'intermédiaire d'un processus de thermoscellage.

# FIG. 1

# FIG. 2

### AVERAGE HEAT LAMINATION STRENGTH

N/15mm

■ Mean (N/15mm)

# FIG. 3

**AVERAGE HEAT LAMINATION STRENGTH**

■ Mean (N/15mm)

# FIG. 4

**AVERAGE HEAT LAMINATION STRENGTH**

■ Mean (N/15mm)

# FIG. 5

AVERAGE HEAT LAMINATION STRENGTH

■ Mean (N/15mm)

# FIG. 6

AVERAGE HEAT LAMINATION STRENGTH

■ Mean (N/15mm)

# FIG. 7

Heated Seal Bar

Al-Foil

Polyolefin

POD

Sealing/ Lamination interface

Paper or Board

Ambient Seal Bar

# FIG. 8

## SEAL / LAMINATION BOND STRENGTH CURVE

AVG SS

Lh

HSIT

SEAL BAR TEMP (degC)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007292705 A
- US 3876452 A
- US 5504172 A
- WO 0001745 A
- US 6960635 B
- US 6525157 B
- US 988999
- US 08082599 W
- WO 2005090427 A
- US 376835
- US 3645992 A
- US 4076698 A
- US 5272236 A
- US 5278272 A
- US 6566446 B
- US 6538070 B
- US 6448341 B
- US 6316549 B
- US 6111023 A
- US 5869575 A
- US 5844045 A
- US 5677383 A
- US 55390604
- US 4599392 A
- US 4988781 A
- US 5938437 A